Europäisches Patentamt

European Patent Office

Office européen des brevets

(19)

(11) Publication number : **0 206 657**
**B1**

(12)

# EUROPEAN PATENT SPECIFICATION

(45) Date of publication of patent specification :
03.01.90

(21) Application number : 86304503.5

(22) Date of filing : 12.06.86

(51) Int. Cl.⁵ : **G 06 F 13/12**, G 06 F 13/28

(54) Apparatus for input/output notification to a processor.

(30) Priority : 28.06.85 US 750565

(43) Date of publication of application :
30.12.86 Bulletin 86/52

(45) Publication of the grant of the patent :
03.01.90 Bulletin 90/01

(84) Designated contracting states :
CH DE FR GB IT LI NL SE

(56) References cited :
US—A— 4 038 642
US—A— 4 133 030
IBM TECHNICAL DISCLOSURE BULLETIN, vol. 9, no.
10, March 1967, page 1362, New York, US; ANNUN-
ZIATA et al.: "Store channel status command"
IBM TECHNICAL DISCLOSURE BULLETIN, vol. 20,
no. 1, June 1977, pages 324-327, New York, US;
DRAPER et al.: "Interrupt stacking"

(73) Proprietor : Hewlett-Packard Company
P.O. Box 10301 3000 Hanover Street
Palo Alto California 94303-0890 (US)

(72) Inventor : James, David V.
3180 South Court
Palo Alto California 94306 (US)
Inventor : Luiz. Fernando A.
17537 Pine Cone Ct.
Monte Sereno California 95030 (US)

(74) Representative : Colgan, Stephen James
CARPMAELS & RANSFORD 43 Bloomsbury Square
London WC1A 2RA (GB)

Jouve, 18, rue St-Denis, 75001 Paris, France

## Description

Background of the Invention

The present invention concerns data transfer within a computer system. Typically, an Input/Output (I/O) device will notify a processor when the I/O device is ready to be serviced by the processor, for instance, after a data transfer to or from memory. Ordinarily, this notification is done by signals across special hardware lines. For instance an interrupt line may extend from each I/O device to a system processor. When one of the I/O devices is ready to be serviced it sends a signal across the interrupt line. The processor then can engage the appropriate software routines to service the I/O device. Typically, some form of prioritization is employed by the processor. The assignment of which priority level an I/O device has is fixed by hardware. The number of priority levels available is often chosen based on an analysis balancing the hardware expense of providing for each priority level, and the importance of the processor being able to distinguish levels of priority in order to more efficiently perform its tasks.

If a processor is servicing an I/O device which has a high priority level, an I/O device with a lower priority level is typically not allowed to interrupt the processor. Therefore the processor must provide for the buffering or queuing of interrupts from the I/O devices, or the I/O device needs to continue to notify the processor of its need for service. Such a buffering scheme done in hardware can be quite complex.

IBM Technical Disclosure Bulletin Vol. 20, No. 1, June 1977, pages 324-327 and US-A-4 038 642 both disclose a method and apparatus for notifying a processor of the status of data transfers between I/O devices and a memory.

The present invention, which is defined by the appended claim 1, includes a plurality of status linked lists which are separate and distinct from a command link list.

In the preferred embodiment of the invention, command elements typically specify the direction, length, and memory address for data transfer between the I/O device and memory locations and a subset of the command elements includes elements that are specifically to be used to report status of data transfers. Each command element in this subset of command elements includes a pointer which points to a status entry. Status entries, when updated by an I/O device, are placed in a status linked list also located in memory. An I/O device may have its own status linked list or may share a single status linked list with several other devices. Generally I/O devices sharing a status linked list are at the same priority level as regards service by a processor. Status entries contain status information on transfers between an I/O device and memory locations. The insertion of status entries into a status linked list is done by hardware in an indivisible series of operations. Depending on the implementation, the hardware may then give asynchronous notification to a control program within the processor that a new element has been added to the second linked list. This notification will cause an interrupt to the currently running process in the processor.

As the number of command linked lists and status linked lists is determined by software, it can easily be varied. The I/O devices associates with each status linked list may be chosen on the basis of process association, priority of service, criticality of resources or by some criterion or combination of criteria. The control program within the processor selects where on the command linked list the command elements used to report status are placed and which information is to be placed into status entries and so may use them to identify waiting processes and to monitor the status of processes on particular status lists. Furthermore, the control program has the option to receive no interrupts when a new status entry is placed into the status linked list, allowing the processor to control the times when I/O service will be done. Regardless, the status information is not lost but remains on the status linked list until the processor accesses them.

Preferred embodiments of the invention will now be described with reference to the accompanying drawings, in which :

Figure 1 shows a block diagram of a processor and various I/O device on a bus.

Figure 2 shows a command linked list in accordance with preferred embodiment of the invention.

Figure 3 shows a command element in accordance with the preferred embodiment of the invention.

Figure 4 shows a command element, a status entry and a linked list of status entries in accordance with the preferred embodiment of the invention.

Figure 5 shows a new status entry in accordance with the preferred embodiment of the present invention.

Figures 6A-6C show a new status entry of Figure 5 being added to the linked list of status entries in accordance with the preferred embodiment of the present invention.

Figure 7 shows the head of the linked list of the status entries shown in Figure 4 in accordance with the preferred embodiment of the present invention.

Description of the Preferred Embodiment

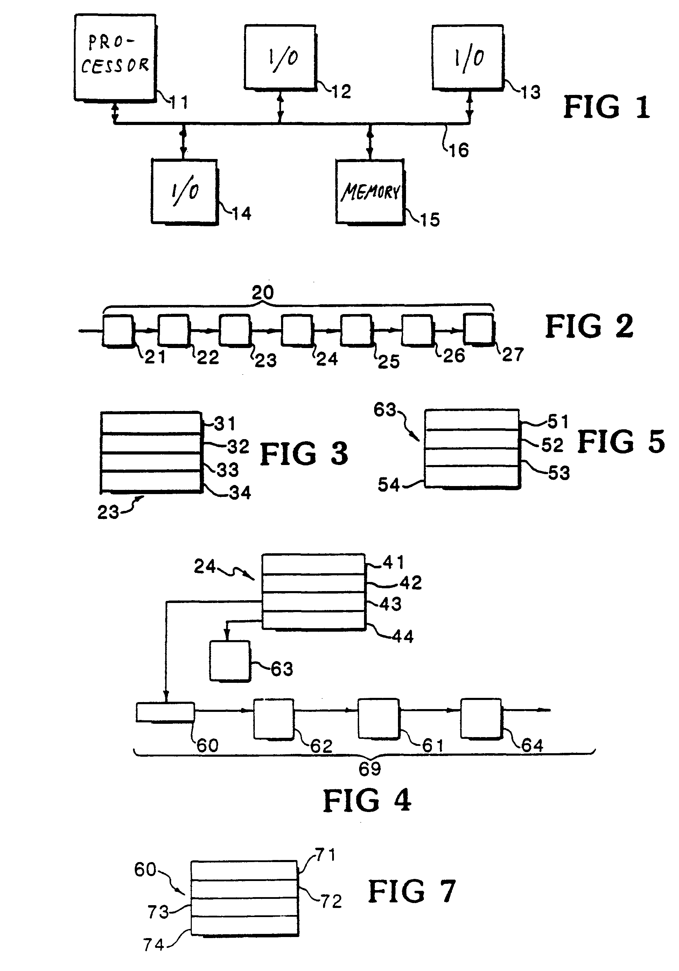

In Figure 1, a simplified block diagram of a computer system is shown which includes a processor 11, an input/output (I/O) device 12, an I/O device 13, an I/O device 14, and a system memory 15 all coupled to a data transfer bus 16. I/O devices 12, 13, and 14 are all direct memory access (DMA) devices, i. e. they are able to transfer data to and from system memory 15.

In Figure 2, a command linked list 20 composed of command elements 21, 22, 23, 24, 25, 26, and 27 is within system memory 15. In the preferred embodiment, each command element is shown to be four 32-bit words, as shown in Figure 3 and Figure 4. Command elements 21, 22, 23, 25, and 27 all have the same format.

In Figure 3, the format of command element 23 is given as a representative example. Command element 23 contains a 32-bit word 31, a 32-bit word 32, a 32-bit word 33, and a 32-bit word 34. Word 31 is a pointer, containing the memory address of command element 24, the next command element in linked list 20. Word 32 is an encoded command which instructs an I/O device as to which operation to perform, e. g., to write to memory or read from memory. Word 33 is an address in system memory 15 to or from where data is to be transferred. Word 34 is a byte count which tells the number of bytes of data to be transferred.

In Figure 4, the format of command element 24 is given. Command element 24 is a special command element used to report status. Command element 24 contains a 32-bit word 41, a 32-bit word 42, a 32-bit word 43, and a 32-bit word 44. Word 41 is a pointer containing the memory address of command element 25, the next command element in linked list 20. Word 42 is an encoded command which instructs an I/O device as to which operation to perform. Word 43 is an address in system memory 15 of a head 60 of a status linked list 69. Status linked list 69 includes status entries 61, 62, and 64. Word 44 is the address of a new status entry 63 into which an I/O device will place status information and which will be inserted into status linked list 69.

Processor 11 places command elements, such as command elements 21-27, on command linked list 20. Command elements 21-27 control data transfers involving a single I/O device, for example I/O device 12. I/O device 12 proceeds through command linked list 20 performing the transfers designated by the command elements. When I/O device 12 comes to command element 24, it reads data in head 60, and places this and other various status information into new entry 63. New entry 63 can contain information as to whether I/O device 12 has detected any errors in transmission, and if so what type of errors they were. Also, I/O device 12 could load residual byte count into new entry 63.

For example, Figure 5 shows a new entry 63 to include a 32-bit word 51, a 32-bit word 52, a 32-bit word 53 and a 32-bit word 54. Into word 51 may be loaded the data in head 60 which is the address of status entry 62. Into word 52 may be loaded encoded status information. Word 53 may be undefined, unless an error occurs. If an error occurs then an identifier which identifies the command element active when the error occurred is loaded into word 43. Into word 54 may be loaded amount of bytes transferred, or a residual byte count.

Status information within word 52 may include information regarding error termination. The status information may differentiate between different types of errors. For instance, there may be provision to encode three kinds of errors within word 52. The first kind signals that there was an incomplete data transfer. The number of bytes not transferred is contained in the residual count in word 54. The second kind of error indicates that there was a device error within a particular I/O device making a data transfer. A device error detected by an I/O device while executing command elements is reported as a status to processor 11. For instance, if a device error is detected by an I/O device while executing command elements 21, 22, or 23, the device error is reported as status in word 44 of command element 24. Detection of a device error causes an I/O device to cease processing executing command elements until a processor intervenes to restart data transactions to the I/O device. The third kind of error indicates there is a faulty electrical connection, for example, a bus across which data is sent may be defective. This is typically detected by parity checking. When an I/O device detects this type of error, it stops further data transactions in order to avoid further corruption of system memory 15. Processor 11 detects this type of error by polling status registers in each I/O device.

Once values are loaded into new entry 63, new entry 63 is placed into status linked list 69. More than one I/O device may use a single status linked list. For example, both I/O device 12 and I/O device 13 may use status linked list 69.

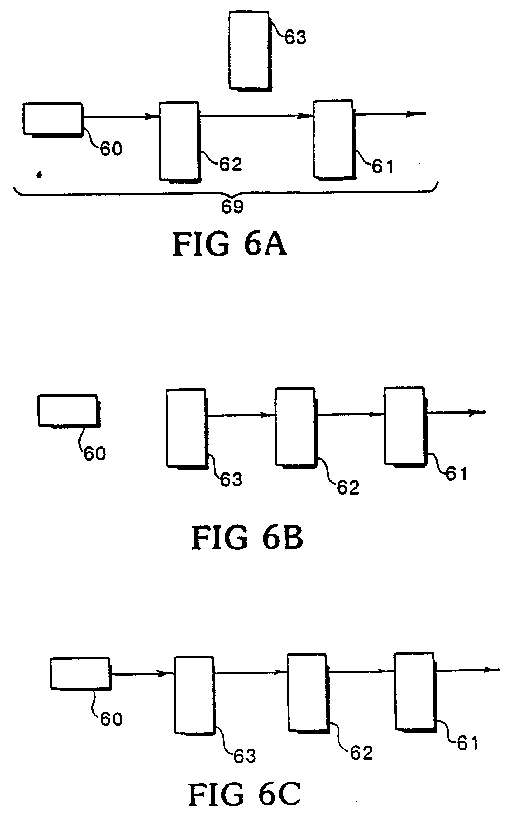

Figures 6A, 6B and 6C show one method to add new entry 63 into status linked list 69. Figure 6A shows status entry 63 ready to be entered into status linked list 69. I/O device 12 and I/O device 13 each place their own entries into status linked list 69. In order to avoid two I/O devices simultaneously adding status entries to status linked list 69, a semaphore may be used. For instance, as shown in Figure 7, head 60 may include a word 71 to be used as a semaphore, as well as a word 72 used to point to the next entry (in Figure 4 the next entry is shown to be status entry 62).

For example, one method I/O device 12 could use in order to add status entry 63 to status linked list 69 might incorporate the following six steps.

1. I/O device 12 reads word 71 to detect if another entity (e. g., another I/O device or processor 11) is accessing status linked list 69. If another entity is accessing status linked list 69, I/O device 12 waits for a duration and repeats this step.

2. If linked list 69 is unaccessed, I/O device 12 alters the contents of word 71 to indicate that linked list 69 is now being accessed by I/O Device 12 (Steps 1 and 2 are separate but successive bus transactions).

3. I/O device 12 reads the contents of word 72.

4. I/O device 12 updates status entry 63, updating word 51 with the value of word 72 which points to status entry 62 and loading other status information as is desirable.

5. Update word 72 to point to status entry 63.

6. Re-initialize contents of word 71 indicating linked list is again unaccessed.

Another method I/O device 12 might use in order to add status entry 63 to linked list 69 incorporates only the following three steps:

1. I/O device 12 performs a « load and clear semaphore » which reads and clears word 71 in a single bus transaction. The contents of word 71 indicates to I/O device whether another entity (e. g., another I/O device or processor 11) is accessing status linked list 69. If another entity is accessing status linked list 69, I/O device 12 waits for a duration and then tries again. Simultaneous to the foregoing, I/O device 12 reads the contents of word 72.

2. I/O device 12 updates status entry 63, updating word 51 with the value of word 72 which points to status entry 62 and loading other status information as is desirable.

3. Update word 72 to point to status entry 63, and simultaneously re-initialize the contents of word 71 indicating linked list is again unaccessed.

On a bus which supports burst transfers of four word blocks, the latter method has fewer steps. It reduces the time taken for each I/O device to update status linked list 69, and therefore reduces conflicts between devices simultaneously desiring to access status linked list 69.

## Claims

1. An apparatus for notifying a processor (11) of the status of data transfers between a plurality of devices (12-14) and a memory (15), the data transfers being made over a bus (16) wherein the processor (11) initiates the data transfers through use of a command linked list (20) by placing into the command linked list (20) command elements which specify data transfers to be performed by the plurality of devices (12-14), the apparatus comprising
a plurality of status linked lists (69) which are separate and distinct from the command linked list (20), each of the status linked lists (69) being used to store status of data transfers that have been attempted between at least one device from the plurality of devices (12-14) and the memory (15), fewer status linked lists (69) being provided in the plurality of status linked lists (69) than there are devices in the plurality of devices (12-14) so that at least one status linked list (69) includes status of data transfers for more than one device (12-14); locations in the memory (15) reserved as status entries; means for loading information into status entries; concatenating means for concatenating the status entries onto the plurality of status linked lists (69); and,
means for accessing the status linked lists with the processor (11).

2. An apparatus as in Claim 1 wherein the information loaded into the status entries includes encoded information which may be used by the processor to determine whether an error occurred during transmission of data and to determine what type of error occurred.

3. An apparatus as in Claim 1 or 2 wherein the types of errors include:
an incomplete data transfer;
a defect within a device; and,
a defect within a connection used to perform data transfers.

4. An apparatus as in Claim 1, 2 or 3 wherein a first status linked list from the plurality of status linked lists includes:
a head of the first status linked list and,
a next entry, wherein the head points to the next entry;
and, wherein the concatenating means includes:
means for reading and setting in a first single transaction over the bus a semaphore within the head of the first status linked list and for, in the first single transaction over the bus, reading an additional word from the head of the first status linked list which contains an address pointer to the next entry,
means for updating a portion of a first status entry to act as a pointer to the next entry in the first status linked list and,
means for, in a second single transaction over the bus, updating the head of the first status linked list to point to the first status entry and, in the second single transaction over the bus, resetting the semaphore within the head.

## Patentansprüche

1. Einrichtung zum Melden des Status von Datenübertragungen zwischen mehreren Vorrichtungen (12 bis 14) und einem Speicher (15) an einen Prozessor (11), wobei die Datenübertragungen über einen Bus (16) stattfinden und der Prozessor (11) die Datenübertragungen unter Verwendung einer befehlsgekoppelten Liste (20) dadurch initiiert, daß in der befehlsgekoppelten Liste (20) Befehlselemente plaziert werden, welche die von den Vorrichtungen (12 bis 14) durchzuführenden Datenübertragungen spezifieren, gekennzeichnet durch
mehrere statusgekoppelte Listen (69), die von den befehlsgekoppelten Listen (20) getrennt und unterschieden sind, wobei jede statusgekoppelte Liste (69) zum Speichern der zwischen mindestens einer Vorrichtung der mehreren Vorrichtungen (12 bis 14) und dem Speicher (15) versuchten Datenübertragungen benutzt wurde, wobei weniger statusgekoppelte Listen (69) aus der Gesamtheit der statusgekopplten Listen (69) als die Gesamtheit der statusgekoppelten Vorrichtungen (12 bis 14) vorgesehen sind, so daß mindestens eine statusgekoppelte Liste (69) den Status der Datenübertragungen für mehr als eine Vorrichtung (12 bis 14) enthält; Listen im Speicher 15, die für Status-Eingaben reserviert sind;
Mittel zum Eingeben von Informationen in die Status-Eingaben ;
Kaskadenmittel zum Kaskadieren der Status-Eingaben auf die statusgekoppelten Listen (69) und Mittel zum Zugreifen auf die statusgekoppelten Listen mit dem Prozessor (11).

2. Einrichtung nach Anspruch 1, bei der die in die Status-Eingaben einzugebende Information fließt, welche von dem Prozessor dazu benutzt werden kann, festzustellen, ob ein Fehler während der Datenübertragung aufgetreten ist und welcher Art dieser Fehler war.

3. Einrichtung nach Anspruch 1 oder 2, wobei die Fehlerarten einschließen :

   unvollständige Datenübertragung ;

   einen Defekt in einer Vorrichtung und

   einen Defekt in einer Verbindung zum Durchführen der Datenübertragungen.

4. Einrichtung nach Anspruch 1, 2 oder 3, bei der eine erste statusgekoppelte Liste aus der Gesamtheit der statusgekoppelten Listen umfaßt :

   einen Kopf der ersten statusgekoppelten Liste und einen nächsten Eingang, wobei der Kopf zu dem nächsten Eingang zeigt ;

   und bei der die Kaskadenmittel umfassen :

   Mittel zum Lesen und Setzen einer Semaphore im Kopf der ersten statusgekoppelten Liste in einer ersten Einzeltransaktion über den Bus und zum Lesen eines Zusatzwortes aus dem Kopf der ersten statusgekoppelten Liste in der ersten Einzeltransaktion über den Bus, wobei dieses Zusatzwort einen Adressenzeiger zum nächsten Eingang enthält, Mittel zum Aktualisieren eines Teils eines ersten Status-Einganges, um als Zeiger auf den nächsten Eingang in der ersten statusgekoppelten Liste zu wirken und

   Mittel zum Aktualisieren des Kopfes der ersten statusgekoppelten Liste in einer zweiten Einzeltransaktion über den Bus, um den ersten Status-Eingang zu bezeichnen und in dieser zweiten Transaktion über den Bus rückzustellen bzw. neu einzustellen.

## Revendications

1. Un dispositif pour notifier à un processeur (11) l'état de transferts de données entre une pluralité d'organes (12 à 14) et une mémoire (15), les transferts de données étant effectués par un bus (16), dans lequel le processeur (11) déclenche les transferts de données au moyen d'une liste chaînée d'ordres (20), en plaçant dans la liste chaînée d'ordres (20) des éléments formant ordre qui spécifient les transferts de données à exécuter par la pluralité d'organes (12 à 14),

   ce dispositif comprenant :

   une pluralité de listes chaînées d'états (69), distinctes entre elles et distinctes de la liste chaînée d'ordres (20), chacune de ces listes chaînées d'états (69) étant utilisée pour mémoriser l'état de transferts de données ayant fait l'objet d'une tentative entre au moins l'un des organes de la pluralité d'organes (12 à 14) et la mémoire (15), le nombre prévu de listes chaînées d'états (69) de la pluralité de listes chaînées d'états (69) étant inférieur à celui des organes de la pluralité d'organes (12 à 14), de telle sorte qu'au moins l'une des listes chaînées d'états (69) contienne l'état de transferts de données pour plus d'un organe (12 à 14),

   des emplacements de la mémoire (15), réservés comme rubrique d'état,

   des moyens pour charger des informations dans les rubriques d'état,

   des moyens de concaténation, pour concaténer les rubriques d'état à la pluralité de listes chaînées d'états (69), et

   des moyens pour permettre au processeur d'accéder aux listes chaînées d'états.

2. Le dispositif de la revendication 1, dans lequel les informations chargées dans les rubriques d'état comportent des informations codées utilisables par le processeur pour déterminer si une erreur est ou non apparue au cours de la transmission des données, et pour déterminer quel type d'erreur est apparu.

3. Le dispositif de la revendication 1 ou 2, dans lequel les types d'erreur comprennent :

   un transfert de données inachevé,

   un défaut dans un organe, et

   un défaut dans une liaison utilisée pour exécuter des transferts de données.

4. Le dispositif de la revendication 1, 2 ou 3, dans lequel une première liste chaînée d'états appartenant à la pluralité de listes chaînées d'états comporte :

   un en-tête de première liste chaînée d'états, et

   une rubrique suivante, l'en-tête pointant sur la rubrique suivante,

   et dans lequel les moyens de concaténation comprennent :

   des moyens pour, au cours d'une première transaction isolée sur le bus, lire et positionner un drapeau dans l'en-tête de la première liste chaînée d'états et pour, au cours de la première transaction isolée sur le bus, lire dans l'en-tête de la première liste chaînée d'états un mot supplémentaire contenant un pointeur d'adresse indiquant la rubrique suivante,

   des moyens pour mettre à jour une partie d'une première rubrique d'état de manière qu'elle puisse servir de pointeur indiquant la rubrique suivante dans la première liste chaînée d'états, et

   des moyens pour, au cours d'une seconde transaction isolée sur le bus, mettre à jour l'en-tête de la première liste chaînée d'états afin de pointer sur la première rubrique d'état et pour, au cours de la seconde transaction isolée sur le bus, restaurer le drapeau se trouvant dans l'en-tête.

FIG 1

FIG 2

FIG 3

FIG 5

FIG 4

FIG 7

1

FIG 6A

FIG 6B

FIG 6C